# EUROPEAN PATENT APPLICATION

(11) **EP 4 321 827 A1**
(43) Date of publication of application: **14.02.2024**
(21) Application number: 23190157.0
(22) Date of filing: 08.08.2023
(51) Int. Cl.: F25J 1/00

(54) **AIR SEPARATION UNIT**

(30) Priority: 10.08.2022 JP 2022127698
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: KANEDA, Takuya, KOBE-SHI, 651-0087 (JP)
(74) Representative: Air Liquide

(57) **Abstract**

An air separation unit (100) comprises: a first waste gas control valve (V7) which is provided in a first waste gas pipe (L22); a first waste gas flow rate control unit (F7) which measures a gas flow rate in the first waste gas pipe (L22) and adjusts a degree of opening of the first waste gas control valve (V7) so that a measured value (F7_pv) which has been measured reaches a preset first waste gas flow rate set value (F7_sv); a second waste gas control valve (V71) which is provided in a second waste gas pipe (L23); a regeneration gas flow rate control unit (F8) which measures the gas flow rate in a regeneration gas pipe (L20) and outputs a first output value (mv1) based on a measured value (F8_pv) which has been measured and a preset regeneration gas flow rate set value (F8_sv); and a control unit (80) which uses, as a target set value (80_sv) of the flow rate of a second waste gas, a value (F8_sv-F7_sv) obtained by subtracting the first waste gas flow rate set value (F7_sv) of the first flow rate measuring unit (F7) from the flow rate set value (F8_sv) of the regeneration gas flow rate, compares the first output value (mv1) with a second output value (mv2) based on a value (F8_pv-F7_pv) obtained by subtracting the measured value (F7_pv) of the first flow rate control unit (F7) from the measured value (F8_pv) of the regeneration gas flow rate control unit (F8), controls the degree of opening of the second waste gas control valve (V71) on the basis of the lower of the values, and adjusts the second waste gas flow rate.

## Description

The present invention relates to an air separation unit.

Feed air which is supplied to an air separation unit is pre-compressed and cooled, and after pre-purification (decarbonization and dehumidification) is passed through a heat exchanger and supplied to a rectification column as described in JP H08-86564 A and JP 2003-106763 A. An apparatus for performing pre-purification of the compressed feed air performs: an adsorption process for purifying the feed air using an adsorbent when the feed air is fed to the air separation unit, and a regeneration process for regenerating the adsorbent by utilizing waste gas fed from the air separation unit.

It is known from WO2022/058043 to use a mixture of nitrogen and oxygen as a waste gas used for regeneration.

When there is a nitrogen gas pipeline and an oxygen gas pipeline for the waste gases fed from the air separation unit, these pipes merge before the waste gases are fed to the pre-purification apparatus. If the pressure of the nitrogen gas and the pressure of the oxygen gas are different at a merging point of these pipes, there is a risk of the flow deteriorating on the low-pressure side. When differential pressure flowmeters are provided in the pipes, the pressure on the pipe side thereof may also decrease, and a differential pressure between the two may become smaller. Furthermore, the waste gas for regeneration is vented while normal operation and a pressurization phase are being started in the pre-purification apparatus. During this period, the pressure inside the pipe rises and the differential pressure of one waste gas falls, and a degree of valve opening is increased to maintain the flow rate. At the same time, a degree of valve opening is increased in order to maintain the flow rate of the other waste gas. However, one of the waste gases may not be supplied because of a lack of pressure, even if the valve is opened, in which case operator intervention is required, and the pressure needs to be restored to normal by adjusting the degrees of opening of both valves. Furthermore, a large flow of one waste gas affects a process balance in the air separation unit.

The present disclosure provides an air separation unit in which a process balance of the air separation unit is unaffected when there are pressure fluctuations inside a regeneration gas pipe, even if two types of gases having a small pressure difference are used as the regeneration gas, and a flow rate of nitrogen waste gas can be adjusted without operator intervention.

### Means for Solving the Problems

According to the invention, there is provided an air separation unit comprising a a pre-purification unit, a rectification column, a main heat exchanger, means for sending air to be purified in the pre-purification unit, means for sending purified air from the pre-purification unit to the main heat exchanger to be cooled, means for sending cooled air from the main heat exchanger to the rectification column, means for delivering a a first waste gas from the rectification column to the main heat exchanger to be warmed, pre-purification unit means for delivering a second waste gas from the rectification column to the main heat exchanger to be warmed, a first waste gas pipe for sending warmed at least part of the first waste gas from the main heat exchanger to a mixing point, a second waste gas pipe for sending at least part of the warmed second waste gas from the main heat exchanger to the mixing point, a regeneration gas pipe for sending a mixture of the at least part of the first waste gas and the at least part of the second waste gas as regeneration gas to the pre-purification unit ,a first waste gas control valve which is provided in the first waste gas pipe downstream of the main heat exchanger a degree of valve opening thereof being adjustable;
- a first waste gas flow rate control unit ( capable of measuring a gas flow rate in the first waste gas pipe (L22) downstream of the main heat exchanger (1), and of adjusting the degree of opening of the first waste gas control valve so that a measured value (which has been measured reaches a preset first waste gas flow rate set value ;
- a second waste gas control valve which is provided in a second waste gas pipe (L23) downstream of the main heat exchanger , a degree of valve opening thereof being adjustable;
- a regeneration gas flow rate control unit which is capable of measuring the gas flow rate in the regeneration gas pipe for circulating the regeneration gas, and which is capable of outputting a first output value based on a measured value (which has been measured and a preset regeneration gas flow rate set value ; and
- a control unit which is capable of using, as a target set value of the flow rate of a second waste gas, a value (obtained by subtracting the first waste gas flow rate set value of the first flow rate measuring unit from the flow rate set value of the regeneration gas flow rate, of comparing the first output value with a second output value (mv2) based on a value obtained by subtracting the measured value of the first flow rate control unit from the measured value of the regeneration gas flow rate control unit , of controlling the degree of opening of the second waste gas control valve on the basis of the lower of the values, and of adjusting the second waste gas flow rate.

Preferably:
- a pressure of the first waste gas is higher than a pressure of the second waste gas, and the flow rate is adjusted so that more than 50% of the first waste gas is utilized as the regeneration gas.
- the rectification column comprising a first rectifying portion capable of operating at a first pressure and a second rectifying portion, capable of operating at a second pressure higher than the second pressure.
- the first waste gas pipe is connected to a lower region of the second rectifying portion and the second waste gas pipe is connected to an upper region of the second rectifying portion.

According to another aspect of the invention, there is provided an air separation process using an air separation unit comprising a a pre-purification unit , a rectification column, a main heat exchanger, means for sending air to be purified in the pre-purification unit, means for sending purified air from the pre-purification unit to the main heat exchanger to be cooled, means for sending cooled air from the main heat exchanger to the rectification column, means for delivering a first waste gas from the rectification column to the main heat exchanger to be warmed, pre-purification unit means for delivering a second waste gas from the rectification column to the main heat exchanger to be warmed, a first waste gas pipe for sending warmed at least part of the first waste gas from the main heat exchanger to a mixing point, a second waste gas pipe for sending at least part of the warmed second waste gas from the main heat exchanger to the mixing point, a regeneration gas pipe for sending a mixture of the at least part of the first waste gas and the at least part of the second waste gas as regeneration gas to the pre-purification unit ,a first waste gas control valve which is provided in the first waste gas pipe downstream of the main heat exchanger, a degree of valve opening thereof being adjustable a second waste gas control valve which is provided in a second waste gas pipe (L23) downstream of the main heat exchanger, a degree of valve opening thereof being adjustable; in which:
- a first waste gas flow rate control unit measures a gas flow rate in the first waste gas pipe downstream of the main heat exchanger, and adjusts the degree of opening of the first waste gas control valve so that a measured value which has been measured reaches a preset first waste gas flow rate set value;
- a regeneration gas flow rate control unit measures the gas flow rate in the regeneration gas pipe for circulating the regeneration gas, and outputs a first output value based on a measured value which has been measured and a preset regeneration gas flow rate set value ; and
- a control unit uses, as a target set value of the flow rate of a second waste gas, a value (obtained by subtracting the first waste gas flow rate set value of the first flow rate measuring unit from the flow rate set value of the regeneration gas flow rate, compares the first output value with a second output value based on a value obtained by subtracting the measured value of the first flow rate control unit from the measured value of the regeneration gas flow rate control unit (F8), controls the degree of opening of the second waste gas control valve on the basis of the lower of the values, and adjusts the second waste gas flow rate.

Optionally:
- a pressure of the first waste gas is higher than a pressure of the second waste gas, and the flow rate is adjusted so that more than 50% of the first waste gas is utilized as the regeneration gas.
- the first waste gas is oxygen-rich gas
- the second waste gas is nitrogen waste gas.

By this means, the degree of valve opening of the second waste gas control valve can be set at a position which is largely unchanged both during normal operation and during a pressurization phase.

A pressure of the first waste gas is higher than a pressure of the second waste gas, and the flow rate is adjusted so that more than 50% of the first waste gas is utilized as the regeneration gas. The first waste gas is oxygen-rich gas (GOX), for example, and the second waste gas is nitrogen waste gas, for example. Flow rates are controlled by the first and second waste gas control valves (V7, V71) so that a mixing ratio of the first waste gas and the second waste gas in the regeneration gas is 7-9:3-1, for example. The control unit (80) performs control to ensure that the second waste gas does not flow in an abnormally larger amount than the first waste gas. An output value (mv) is calculated as a control amount of the degree of opening from a set value (sv) and a measured value (pv) of the flow rate, and the degree of valve opening is adjusted on the basis of this output value (mv).

The air separation unit (100) may comprise:
- a first compressor (C1) for compressing the feed air;
- a refrigerator (R1) for cooling the feed air (compressed air) compressed by the compressor (C1);
- a pre-purification unit (50) for pre-purifying (removing carbon dioxide and/or moisture, for example) the feed air (cooled compressed air) that has been cooled by the refrigerator (R1);
- a main heat exchanger (1), into which the feed air (pre-purified feed air) that has been pre-purified by the pre-purification unit (50) is introduced for heat exchange; and
- a rectification column (2) which is supplied, via the pipe (L20), with feed air drawn from the main heat exchanger (1), and obtains product nitrogen (high-purity nitrogen) from this feed air.

The oxygen-rich gas (GOX) is drawn from a medium-pressure rectifying portion of the rectification column (2) and passed through the main heat exchanger (1) via the first waste gas pipe (L22), from where it can be utilized as the regeneration gas, or it may be extracted as product oxygen gas, or released to the atmosphere.

The nitrogen waste gas is drawn from a low-pressure rectifying portion of the rectification column (2) and passed through the main heat exchanger (1) via the second waste gas pipe (L23), from where it can be utilized as the regeneration gas, or released to the atmosphere.

The first waste gas pipe (L22) and the second waste gas pipe (L23) may merge at a merging point M, and may deliver the waste gases to the pre-purification unit (50) as the regeneration gas via the regeneration gas pipe (L20).

The air separation unit (100) may further comprise a crude argon column, a high-purity refined argon column, and a separate heat exchanger, etc.

### Effects

(1) A process balance of the air separation unit is unaffected when there are pressure fluctuations inside a regeneration gas pipe, even if two types of gases having a small pressure difference are used as a regeneration gas.
(2) A flow rate of nitrogen waste gas can be adjusted without operator intervention.

### Brief Description of the Drawings

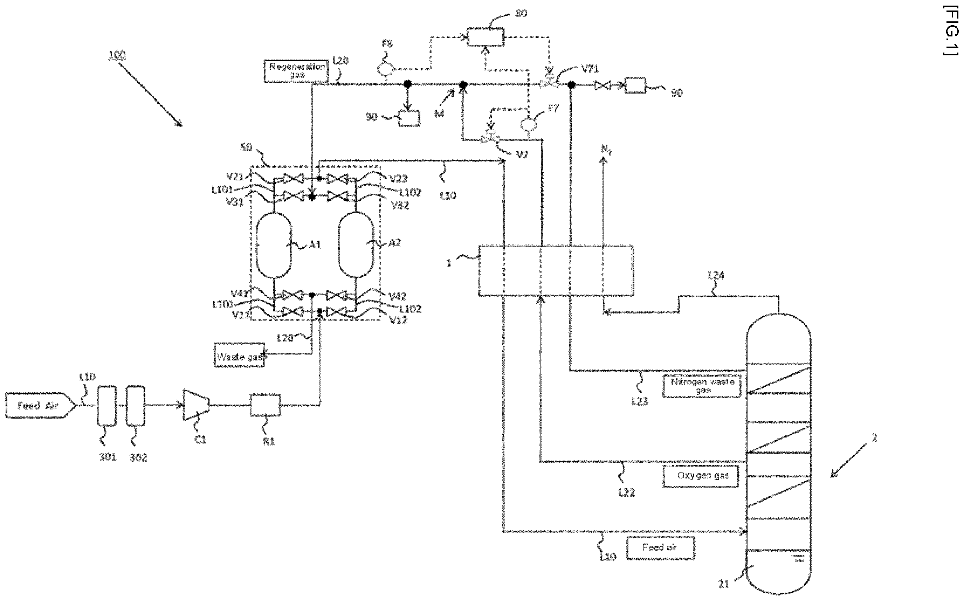

Fig. 1 illustrates an air separation unit according to embodiment 1.

### Embodiments of the Invention

Several embodiments of the present invention will be described below. The embodiments described below illustrate examples of the present invention. The present invention is in no way limited by the following embodiments, and also includes a number of variant modes which are implemented within a scope that does not alter the gist of the present invention. It should be noted that not all of the components described below are essential components of the present invention. Upstream and downstream are set on the basis of a gas flow direction.

### (Embodiment 1)

An air separation unit 100 according to embodiment 1 will be described with the aid of fig. 1.

Feed air passes through a filtration means 301 and a catalyst column 302 on a path (pipe) L10, to remove foreign matter and solids in the air. Compressed feed air which has been compressed by a compressor C1 provided in the path L10 is cooled to a predetermined temperature in a refrigerator R1.

### Pre-purification unit

A pre-purification unit 50 comprises: a first adsorption column A1, and a second adsorption column A2 arranged in parallel with the first adsorption column A1. An adsorption treatment is implemented in one adsorption column, a regeneration treatment is implemented in the other adsorption column, and the adsorption treatment and the regeneration treatment are implemented alternately.

The adsorption treatment will first be described. The path L10 for introducing the feed air into the adsorption column branches into a first branch introduction path L101 connected to the first adsorption column A1, and a second branch introduction path L102 connected to the second adsorption column A2, and a first inlet valve V11 and a second inlet valve V12 are provided respectively in the first branch introduction path L101 and the second branch introduction path L102. If the adsorption treatment is to be performed in the first adsorption column A1, the first inlet valve V11 is opened and the second inlet valve V12 is closed. If the adsorption treatment is to be performed in the second adsorption column A2, the first inlet valve V11 is closed and the second inlet valve V12 is opened.

A first outlet valve V21 is provided in a first branch lead-out path L101 on the outlet side of the first adsorption column A1, and a second outlet valve V22 is provided in a second branch lead-out path L102 on the outlet side of the second adsorption column A2. If the adsorption treatment is to be performed in the first adsorption column A1, the first outlet valve V21 is opened and the second outlet valve V22 is closed. If the adsorption treatment is to be performed in the second adsorption column A2, the first outlet valve V21 is closed and the second outlet valve V22 is opened. In fig. 1, the first branch lead-out path L101 and the second branch lead-out path L102 merge to become the path L10.

The feed air that has been pre-purified in the first adsorption column A1 or the second adsorption column A2 is introduced through the path L10 into the downstream main heat exchanger 1.

The regeneration treatment will next be described. Oxygen-rich gas is passed through the main heat exchanger 1 via a first waste gas pipe L22, nitrogen waste gas is passed through the main heat exchanger 1 via a second waste gas pipe L23, merging at a merging point to form regeneration gas which is then introduced into the pre-purification unit 50 via a regeneration gas pipe L20.

A pressure of the oxygen-rich gas, which is a first waste gas, is higher than a pressure of the nitrogen waste gas, which is a second waste gas, and the flow rate is adjusted so that more than 50% of the oxygen-rich gas is utilized as the regeneration gas.

The regeneration gas pipe L20 branches into a first branch introduction path connected to the first adsorption column A1, and a second branch introduction path connected to the second adsorption column A2, and a first waste gas inlet valve V31 and a second waste gas inlet valve V32 are provided respectively in the first branch introduction path and the second branch introduction path. If the regeneration treatment is to be performed in the first adsorption column A1, the first waste gas inlet valve V31 is opened and the second waste gas inlet valve V32 is closed. If the regeneration treatment is to be performed in the second adsorption column A2, the first waste gas inlet valve V31 is closed and the second waste gas inlet valve V32 is opened.

A first waste gas outlet valve V41 is provided in a first branch lead-out path on the waste gas outlet side of the first adsorption column A1, and a second waste gas outlet valve V42 is provided in a second branch lead-out path on the waste gas outlet side of the second adsorption column A2. If the regeneration treatment is to be performed in the first adsorption column A1, the first waste gas outlet valve V41 is opened and the second waste gas outlet valve V42 is closed. If the regeneration treatment is to be performed in the second adsorption column A2, the first waste gas outlet valve V41 is closed and the second waste gas outlet valve V42 is opened. In fig. 1, the first branch lead-out path and the second branch lead-out path merge to become the path L20, which is vented to the atmosphere, for example.

### Configuration of rectification column

The air separation unit 100 comprises: the main heat exchanger 1; and a rectification column 2 into which the feed air that has passed through the main heat exchanger 1 is introduced via the pipe L10.

The rectification column 2 may be separated into two portions, namely a low-pressure rectifying portion and a medium-pressure rectifying portion. A nitrogen-rich gas may be drawn from a column top of the low-pressure rectifying portion or a column top of the medium-pressure rectifying portion, pass through the main heat exchanger 1 via a pipe L24, and then be extracted. The medium-pressure rectifying portion may comprise one or more nitrogen condensers for condensing a rectification product drawn from the column top thereof. An oxygen-rich liquid drawn from a column bottom of the medium-pressure rectifying portion may be introduced into the low-pressure rectifying portion.

A vent 90 which branches from the regeneration gas pipe L23 may be provided to release the regeneration gas into the atmosphere. A vent 90 which branches from the second waste gas pipe L23 may be provided to release the second waste gas into the atmosphere.

A first waste gas control valve V7 is provided in the first waste gas pipe L22 downstream of the main heat exchanger 1.

A first flow rate control unit F7 measures a gas flow rate in the first waste gas pipe L22 downstream of the main heat exchanger 1, and adjusts the degree of opening of the first waste gas control valve V7 so that a measured value (F7_pv) which has been measured reaches a preset first waste gas flow rate set value (F7_sv).

A second waste gas control valve V71 is provided in the second waste gas pipe L23 downstream of the main heat exchanger 1. The degree of opening of the second waste gas control valve V71 is adjusted by means of two control units.

A mixing ratio for the first waste gas flow rate set value (F7_sv) and a second waste gas flow rate set value (F71_sv) may be 7-9:3-1, for example. The flow rates are controlled by the first and second waste gas control valves V7, V71 so as to achieve this mixing ratio. The flow rate may be controlled at 9:1 during normal operation.

A regeneration gas flow rate control unit F8 is provided in the regeneration gas pipe L20 downstream of the merging point M. The regeneration gas flow rate control unit F8 measures a gas flow rate in the regeneration gas pipe L20 for circulating the regeneration gas. The gas flow rate in the regeneration gas pipe L20 is the total amount of the first waste gas and the second waste gas. For example, when the first waste gas is "9" and the second waste gas is"1", the regeneration gas is "10". The first waste gas flow rate is controlled so as to maintain the first waste gas flow rate set value, and the second waste gas flow rate is controlled so as to maintain the second waste gas flow rate set value. The regeneration gas flow rate control unit F8 outputs to the control unit 80 a first output value (mv1) based on a measured value (F8_pv) which has been measured and a preset regeneration gas flow rate set value (F8_sv).

In the pressurization phase, the degrees of opening of the valves are conventionally set so that the first waste gas control valve V7 is opened in order to maintain the set value of "9", while the second waste gas control valve V71 is also opened in order to maintain the set value of "10" for the regeneration gas flow rate, so there is a rise in pressure on a secondary side of both control valves V7 and V71 (the downstream side of the valves), at which point there is no longer a flow of the first waste gas which is at an even lower pressure (the set value F7_pv of the first flow rate measuring unit F7 becomes smaller than the set value (F7_sv). As a result, the amount of regeneration gas also decreases, which is to say that the measured value (F8_pv) of the regeneration gas flow rate measuring unit F8 further decreases, and therefore the second waste gas control valve V71 is opened further.

In this embodiment, the control unit 80 sets, as a target set value (80_sv) of the flow rate of the second waste gas, a value (F8_sv-F7_sv) obtained by subtracting the first waste gas flow rate set value (F7_sv) of the first flow rate measuring unit F7 from the flow rate set value (F8_sv) of the regeneration gas flow rate. A predetermined value (a value of around 5 to 15% of the second waste gas flow rate set value) may be further subtracted from the subtracted value (F8_sv-F7_sv) to set the target set value (80_sv).

The control unit 80 calculates a second output value (mv2) based on a value (F8_pv-F7_pv) obtained by subtracting the measured value (F7_pv) of the first flow rate control unit (F7) from the measured value (F8_pv) of the regeneration gas flow rate control unit (F8).

The control unit 80 compares the first output value (mv1) sent from the regeneration gas flow rate control unit F8 with the second output value (mv2), and controls the degree of opening of the second waste gas control valve V71 on the basis of the lower of the values.

As a result, it is possible to ensure a large flow of the oxygen-rich gas, without the second waste gas (nitrogen waste gas) suddenly flowing in a larger amount than the first waste gas (oxygen-rich gas).

### Examples

(1) Flow rate setting of waste gases
   Oxygen-rich gas flow rate set value (F7_sv): 9
   Nitrogen waste gas flow rate set value (F71_sv): 1
   Regeneration gas flow rate set value (F8_sv): 10
(2) Measured flow rate values of waste gases
   Oxygen-rich gas measured flow rate value (F7_pv): varies above/below 9 Nitrogen waste gas measured flow rate value (F71_pv): varies above/below 1 Regeneration gas measured flow rate value (F8_pv): varies above/below 10
(3) Pressure of waste gases
   The unit operates with the nitrogen waste gas pressure at around 1.05-1.2 times the pressure (1) of the oxygen-rich gas. The pressures are determined by the operating pressure of the air separation unit and the number of differential pressure flowmeters provided in the pipes, etc.
(4) Flow rate control in the pre-purification apparatus while normal operation and the pressurization phase are being started, and the regeneration gas is being vented
   A value (F8_sv-F7_sv=1 0-9=1) obtained by subtracting the first waste gas flow rate set value (F7_sv=9) of the first flow rate control unit F7 from the flow rate set value (F8_sv=10) of the regeneration gas flow rate is set as the target set value (80_sv) of the flow rate of the second waste gas.

The first waste gas flows less readily and therefore has a value smaller than "9". A value (F8_pv-F7_pv) obtained by subtracting the measured value (F7_pv<9) of the first flow rate control unit F7 from the measured value (F8_pv=10) of the regeneration gas flow rate control unit F8 is therefore a value of greater than "1". The value is "2" or the like, for example. When this value is compared with the second waste gas flow rate set value (F71_sv=1) which has been set as described above, the subtracted value (F8_pv-F7_pv) is found to be larger, and therefore a value for producing a smaller degree of valve opening (-1) is set as the second output value (mv2).

The first output value (mv1) sent from the regeneration gas flow rate control unit F8 is calculated by comparing the set value (F8_sv) and the measured value (F8_pv). When set value (F8_sv)>measured value (F8_pv), a value (+1 or greater) for increasing the degree of valve opening corresponding to this difference is set as the first output value (mv1), and when set value (F8_sv)<measured value (F8_pv), a value (-1 or less) for reducing the degree of valve opening corresponding to this difference is set as the first output value (mv1). When set value (F8_sv)=measured value (F8_pv), an output value (0) is set to maintain the degree of opening.

The first output value (mv1) is compared with the second output value (mv2), and the degree of opening of the second waste gas control valve V71 is controlled on the basis of the lower of the values.

### Example 1

First output value (mv1): 0
Second output value (mv2): -1
Lower of the values: -1

Degree of valve opening of second waste gas control valve V71: less than current degree of opening

By this means, the degree of valve opening of the second waste gas control valve V71 is maintained at a position which is largely unchanged both during normal operation and during the pressurization phase, and the flow rate of the first waste gas is also maintained without a sudden flow of the second waste gas.

### Key to Symbols

- 1: Main heat exchanger
- 2: Rectification column
- 50: Pre-purification unit
- 80: Control unit
- F7: First flow rate measuring unit
- F8: Regeneration gas flow rate measuring unit
- V7: First waste gas control valve
- V71: Second waste gas control valve

## Claims

1. Air separation unit (100) comprising a pre-purification unit (50), a rectification column (2), a main heat exchanger (1), means (C1) for sending air to be purified in the pre-purification unit, means for sending purified air (L20)from the pre-purification unit to the main heat exchanger to be cooled, means for sending cooled air from the main heat exchanger to the rectification column, means for delivering a first waste gas from the rectification column to the main heat exchanger to be warmed, pre-purification unit means for delivering a second waste gas from the rectification column to the main heat exchanger to be warmed, a first waste gas pipe (L22) for sending warmed at least part of the first waste gas from the main heat exchanger to a mixing point (M), a second waste gas pipe (L23) for sending at least part of the warmed second waste gas from the main heat exchanger to the mixing point, a regeneration gas pipe (L20) for sending a mixture of the at least part of the first waste gas and the at least part of the second waste gas as regeneration gas to the pre-purification unit (50),a first waste gas control valve (V7) which is provided in the first waste gas pipe (L22) downstream of the main heat exchanger (1), a degree of valve opening thereof being adjustable;
- a first waste gas flow rate control unit (F7) capable of measuring a gas flow rate in the first waste gas pipe (L22) downstream of the main heat exchanger (1), and of adjusting the degree of opening of the first waste gas control valve (V7) so that a measured value (F7_pv) which has been measured reaches a preset first waste gas flow rate set value (F7_sv);
- a second waste gas control valve (V71) which is provided in a second waste gas pipe (L23) downstream of the main heat exchanger (1), a degree of valve opening thereof being adjustable;
- a regeneration gas flow rate control unit (F8) which is capable of measuring the gas flow rate in the regeneration gas pipe (L20) for circulating the regeneration gas, and which is capable of outputting a first output value (mv1) based on a measured value (F8_pv) which has been measured and a preset regeneration gas flow rate set value (F8_sv); and
- a control unit (80) which is capable of using, as a target set value (80_sv) of the flow rate of a second waste gas, a value (F8_sv-F7_sv) obtained by subtracting the first waste gas flow rate set value (F7_sv) of the first flow rate measuring unit (F7) from the flow rate set value (F8_sv) of the regeneration gas flow rate, of comparing the first output value (mv1) with a second output value (mv2) based on a value (F8_pv-F7_pv) obtained by subtracting the measured value (F7_pv) of the first flow rate control unit (F7) from the measured value (F8_pv) of the regeneration gas flow rate control unit (F8), of controlling the degree of opening of the second waste gas control valve (V71) on the basis of the lower of the values, and of adjusting the second waste gas flow rate.

2. Air separation unit according to claim 1, wherein a pressure of the first waste gas is higher than a pressure of the second waste gas, and the flow rate is adjusted so that more than 50% of the first waste gas is utilized as the regeneration gas.

3. Air separation unit according to claim 1 or 2 wherein the rectification column comprising a first rectifying portion capable of operating at a first pressure and a second rectifying portion, capable of operating at a second pressure higher than the second pressure.

4. Air separation unit according to Claim 3 wherein the first waste gas pipe is connected to a lower region of the second rectifying portion and the second waste gas pipe is connected to an upper region of the second rectifying portion.

5. Air separation process using an air separation unit comprising a pre-purification unit (50), a rectification column (2), a main heat exchanger (1), means (C1) for sending air to be purified in the pre-purification unit, means for sending purified air (L20)from the pre-purification unit to the main heat exchanger to be cooled, means for sending cooled air from the main heat exchanger to the rectification column, means for delivering a first waste gas from the rectification column to the main heat exchanger to be warmed, pre-purification unit means for delivering a second waste gas from the rectification column to the main heat exchanger to be warmed, a first waste gas pipe (L22) for sending warmed at least part of the first waste gas from the main heat exchanger to a mixing point (M), a second waste gas pipe (L23) for sending at least part of the warmed second waste gas from the main heat exchanger to the mixing point, a regeneration gas pipe (L20) for sending a mixture of the at least part of the first waste gas and the at least part of the second waste gas as regeneration gas to the pre-purification unit (50),a first waste gas control valve (V7) which is provided in the first waste gas pipe (L22) downstream of the main heat exchanger (1), a degree of valve opening thereof being adjustable a second waste gas control valve (V71) which is provided in a second waste gas pipe (L23) downstream of the main heat exchanger (1), a degree of valve opening thereof being adjustable;; in which
- a first waste gas flow rate control unit (F7) measures a gas flow rate in the first waste gas pipe (L22) downstream of the main heat exchanger (1), and adjusts the degree of opening of the first waste gas control valve (V7) so that a measured value (F7_pv) which has been measured reaches a preset first waste gas flow rate set value (F7_sv);
- a regeneration gas flow rate control unit (F8) measures the gas flow rate in the regeneration gas pipe (L20) for circulating the regeneration gas, and outputs a first output value (mv1) based on a measured value (F8_pv) which has been measured and a preset regeneration gas flow rate set value (F8_sv); and
- a control unit (80) uses, as a target set value (80_sv) of the flow rate of a second waste gas, a value (F8_sv-F7_sv) obtained by subtracting the first waste gas flow rate set value (F7_sv) of the first flow rate measuring unit (F7) from the flow rate set value (F8_sv) of the regeneration gas flow rate, compares the first output value (mv1) with a second output value (mv2) based on a value (F8_pv-F7_pv) obtained by subtracting the measured value (F7_pv) of the first flow rate control unit (F7) from the measured value (F8_pv) of the regeneration gas flow rate control unit (F8), controls the degree of opening of the second waste gas control valve (V71) on the basis of the lower of the values, and adjusts the second waste gas flow rate.

6. Air separation process according to claim 5, wherein a pressure of the first waste gas is higher than a pressure of the second waste gas, and the flow rate is adjusted so that more than 50% of the first waste gas is utilized as the regeneration gas.

7. Air separation process according to Claim 5 or 6 in which the first waste gas is oxygen-rich gas and the second waste gas is nitrogen gas.
